# EUROPEAN PATENT SPECIFICATION

(11) **EP 0 535 046 B1**
(45) Date of publication and mention of the grant of the patent: **21.09.1994**
(21) Application number: 91911009.8
(22) Date of filing: 14.06.1991
(51) Int. Cl.: B01D 29/01, B01D 29/52, B01D 29/96

(54) **FILTER SCREEN AND METHOD FOR REPAIRING IT**
FILTERSIEB UND VERFAHREN ZU DESSEN INSTANDSETZUNG
TAMIS FILTRANT ET METHODE POUR SA REPARATION

(30) Priority: 22.06.1990 GB 9013965
(43) Date of publication of application: 07.04.1993
(73) Proprietor: United Wire Limited, Edinburgh EH5 1HT (GB)
(72) Inventor: BAILEY, Marshall, Graham, Benchory, Kincardineshire AB3 3PY (GB); SOUTER, George, Lawrence, Peterculter, Aberdeen AB1 0LB (GB)
(74) Representative: Nash, Keith Wilfrid
(86) International application number: GB9100957
(87) International publication number: WO9200133

(56) References cited:
- EP-A- 359 878
- WO-A-88/08739
- DE-U- 8 707 512
- FR-A- 1 160 074
- GB-A- 2 175 222

## Description

### Field of the invention

This invention relates to a filter screen, and more especially a filter screen of the kind which in use is located in a vibrating basket of a filtering machine for the treatment of slurries or the like.

### Background to the invention

A filter screen conventionally comprises a steel frame with one or more filtering meshes secured and tensioned over its area. In use, the mesh can become damaged, creating holes through which can pass material which the mesh is intended to hold back. Replacement of the mesh in such an event is expensive and time consuming, requiring removal of the frame from the machine, removal of the damaged mesh, replacement by a new mesh and tensioning of the latter, and replacement of the frame in the machine.

It is known to effect patching of a damaged mesh with metal sheet patches or, in the case of a multiple mesh assembly, to bond the two meshes together at the site of damage. The former procedure results in diminished throughput, whilst the latter results in reduced efficiency due to the diminished differential vibration of the two meshes, which serves to dislodge material tending to clog the upper mesh. Both procedures, whilst more economical than replacement of a complete mesh, are just as time consuming as a complete mesh replacement.

It has been proposed to provide a filter screen assembly having a main frame in which are disposed a plurality of modular screen units. Thus if any one screen unit becomes damaged it is merely necessary to remove that unit and to replace it with a new unit.

For example, in EP-A-0359878 there is disclosed a filter screen comprising a main frame divided by cross-pieces into a plurality of equally sized sub-areas, each sub-area having snap engagement means for receiving a correspondingly dimensioned screen module.

While such a filter screen (hereinafter referred to as a filter screen of the type described) operates satisfactorily, it suffers from the disadvantage of a high initial cost.

GB-A-2175222 discloses a filter screen having a rectilinear frame with transverse intermediate struts which define apertures over which a filter mesh is bonded.

In WO-A-88/08739 there is similarly disclosed an apertured filter screen across which a filter cloth or mesh is secured.

Likewise, DE-U-8707512.2 discloses a plastics frame with cross-pieces forming apertures over which a filter mesh is secured or thermo-fixed.

However, none of the above three documents discloses or suggests the use of replacement screen modules in the respective apertures.

### Summary of the invention

According to the present invention a filter screen of the type described in EP-A-0 359 878 and in the pre-characterising part of claim 1 is provided, which is characterised in that a single screen mesh is stretched over the main frame, the mesh being tensioned and secured around the main frame and around each sub-area, and in that the snap engagement means for each module comprises a lip in each sub-area of the main frame suitable to engage with a corresponding groove in a screen module, whereby if the mesh becomes damaged at any sub-area the mesh can be cut away around that sub-area and a screen module snap fitted in its place.

In this manner any damage can be easily repaired. Thus it may even occur that eventually each sub-area is replaced by a screen module, so that none of the original single screen mesh will be in use.

The main frame may be rectangular and may be divided into sub-areas of rectangular shape by cross-pieces extending in mutually perpendicular directions parallel to its sides.

The invention also extends to a method of repairing a filter screen as above characterised and having a damaged screen mesh, comprising the steps of cutting around the sub-area containing the damage, and snap fitting a filter screen module into such vacant sub-area.

### Brief description of the drawings

An example of a filter screen in accordance with the invention will now be described, with reference to the accompanying drawings, in which:
Figure 1 shows a perspective view of a damaged filter screen in accordance with the invention, with a screen module about to be inserted in a damaged sub-area; and
Figure 2 shows a section through an inserted module after a repair has been effected.

### Detailed description

A rectangular main frame 10 is moulded of a plastics material, such as a glass-fibre reinforced polyester resin compound. The frame 10 consists of a border 12 sub-divided by cross-pieces or interstices 14 into equally shaped sized rectangular sub-areas 18.

The main frame so far described is similar to that disclosed in the above-mentioned EP-A-0 359 878
Stretched across the top of the main frame 10 is a single screen mesh 20, which is tensioned to a suitable required tension and secured both to the border 12 and to each of the cross-pieces 14 defining the sub-areas 18.

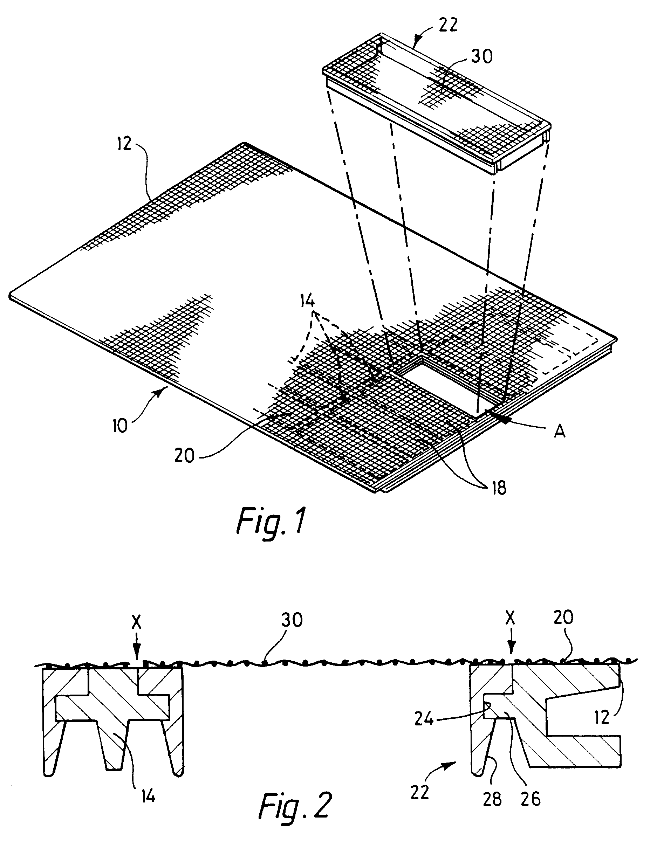

If in use of the filter screen the mesh 20 becomes damaged, eg at a sub-area as shown at A in Figure 1, the mesh is cut around the periphery of that sub-area, as indicated by the references X in Figure 2. A screen module 22 is then snap fitted into the vacant sub-area.

The module is similar to that described in the above-mentioned EP-A-0 359 878, and comprises a sub-frame of rectangular shape (corresponding in size to a sub-area 18), on the outer periphery of which is formed a groove 24 which is adapted to snap fit on to a lip 26 formed in the border and cross-pieces of the main frame. A tapered edge 28 on the outer surface of the module below the groove 24 facilitates camming over the lip when the module is inserted. The module has a screen 30 tensioned and bonded to the upper surface of the sub-frame, so that when inserted there is practically a continuous screen surface formed by the main screen 20 and the subframe screen 30.

It will be apparent that any number of repairs can be effected in the main frame, so that the resulting filter screen assembly may eventually consist entirely modules inserted in the main frame. Thus it is even possible that the screen assembly may outlast the vibrating basket of the machine in which it is used.

## Claims

1. A filter screen comprising a main frame (10) divided by cross-pieces (14) into a plurality of equally sized sub-areas (18), each sub-area having snap engagement means suitable for receiving a correspondingly dimensioned screen module (22), the snap engagement means for each module (22) comprising a lip (26) in each sub-area (18) of the main frame suitable to engage with a corresponding groove (24) in a screen module, characterised in that a single screen mesh (20) is stretched over the main frame, the mesh being tensioned and secured around the main frame and around each sub-area, whereby if the mesh becomes damaged at any sub-area (A) the mesh can be cut away around that sub-area (A) and a screen module (22) snap fitted in its place.

2. A filter screen according to claim 1 in which the main frame (10) is rectangular and is divided into sub-areas (18) of rectangular shape by cross-pieces (14) extending in mutually perpendicular directions parallel to its sides (12).

3. A method of repairing a filter screen according to claim 1 or claim 2 and having a damaged screen mesh (20), comprising the steps of cutting around each sub-area (A) containing the damage, and snap fitting a screen module (22) into each such vacant sub-area (A).

## Patentansprüche

1. Filtersieb mit einem Hauptrahmen (10), der durch Querriegel (14) in eine Vielzahl von Teilflächen (18) gleicher Größe unterteilt ist, wobei jede Teilfläche eine Einrastvorrichtung aufweist, die zur Aufnahme eines entsprechend dimensionierten Siebmoduls (22) geeignet ist, und wobei die Einrastvorrichtung für jedes Modul (22) eine Lippe (26) in jeder Teilfläche (18) des Hauptrahmens aufweist, die in Eingriff mit einer entsprechenden Nut (24) in einem Siebmodul bringbar ist, dadurch gekennzeichnet, daß ein einzelnes Siebmaschengewebe (20) über den Hauptrahmen gelegt ist, das um den Hauptrahmen und um jede Teilfläche gespannt und befestigt ist, wobei dann, wenn das Maschengitter an einer Teilfläche (A) beschädigt ist, das Maschengitter um diese Teilfläche (A) herum ausgeschnitten werden kann und ein Siebmodul (22) einrastend an dessen Stelle gesetzt werden kann.

2. Filtersieb nach Anspruch 1, dadurch gekennzeichnet, daß der Hauptrahmen (10) rechteckförmig ist und in Teilflächen (18) von Rechteckform durch Querriegel (14) unterteilt ist, die in zueinander senkrechten Richtungen parallel zu dessen Seiten verlaufen.

3. Verfahren zum Instandsetzen eines Filtersiebes (7) nach Anspruch 1 oder 2, mit einem beschädigten Maschengitter (20), dadurch gekennzeichnet, daß jede die Schadstelle aufweisende Teilfläche (A) ausgeschnitten wird, und daß ein Siebmodul (22) einrastend in jede dieser freien Teilflächen (A) eingesetzt wird.

## Revendications

1. Un tamis filtrant comprenant un châssis principal (10) divisé par des barres transversales (14) en un ensemble de sous-zones (18) de taille égale, chaque sous-zone comportant des moyens d'accouplement à déclic adaptés pour recevoir un module de tamis (22) dimensionné de façon correspondante, les moyens d'accouplement à déclic pour chaque module (22) comprenant une lèvre (26) dans chaque sous-zone (18) du châssis principal, adaptée pour pénétrer dans une rainure correspondante (24) dans un module de tamis, caractérisé en ce qu'un seul treillis de tamis (20) est tendu sur le châssis principal, le treillis étant tendu et fixé autour du châssis principal et autour de chaque sous-zone, grâce à quoi si le treillis vient à être endommagé dans une sous-zone quelconque (A), on peut découper le treillis autour de cette sous-zone (A), et on peut encliqueter à sa place un module de tamis (22).

2. Un tamis filtrant selon la revendication 1, dans lequel le châssis principal (10) est rectangulaire et il est divisé en sous-zones (18) de forme rectangulaire par des barres transversales (14) s'étendant dans des directions mutuellement perpendiculaires, parallèles à ses côtés (12).

3. Un procédé de réparation d'un tamis filtrant selon la revendication 1 ou la revendication 2, et ayant un treillis de tamis (20) endommagé, comprenant les étapes qui consistent à découper chaque sous-zone (A) contenant le dommage, et à encliqueter un module de tamis (22) dans chaque sous-zone ainsi vacante (A).
